# FASCICULE DE BREVET EUROPEEN

(11) **EP 3 564 612 B1**
(45) Date de publication et mention de la délivrance du brevet: **16.12.2020**
(21) Numéro de dépôt: 19179995.6
(22) Date de dépôt: 08.07.2010
(51) Int. Cl.: F28D 15/04, F28D 15/06, B82B 1/00

(54) **DISPOSITIF A TRANSFERT THERMIQUE COMPRENANT DES PARTICULES EN SUSPENSION DANS UN FLUIDE CALOPORTEUR**
VORRICHTUNG ZUR WÄRMEÜBERTRAGUNG, DIE SUSPENSIONSPARTIKEL IN EINER WÄRMEÜBERTRAGUNGSFLÜSSIGKEIT UMFASST
HEAT TRANSFER DEVICE INCLUDING PARTICLES SUSPENDED IN A HEAT-TRANSFER FLUID

(30) Priorité: 28.07.2009 FR 0903701
(43) Date de publication de la demande: 06.11.2019
(62) Demande divisionnaire de: 10168862.0
(73) Titulaire: Thales, 92400 Courbevoie (FR)
(72) Inventeur: TANTOLIN, Christian, 38660 LUMBIN (FR); SARNO, Claude, 26800 ETOILE SUR RHONE (FR)
(74) Mandataire: Marks & Clerk France

(56) Documents cités:
- WO-A1-01/06581
- DE-A1- 3 844 229
- US-A- 4 664 181
- US-A- 5 579 828
- US-A1- 2004 148 959
- US-A1- 2005 022 979
- US-A1- 2006 060 329

## Description

La présente invention concerne un dispositif à transfert de chaleur. De tels dispositifs sont par exemples adaptés à l'évacuation de la chaleur générée par des équipements reliés audit dispositif.

Le principe d'un dispositif de transfert de chaleur est toujours fondé sur l'utilisation d'un fluide caloporteur circulant en boucle fermée entre une zone chaude, c'est-à-dire une zone où la puissance thermique est dissipée, et une zone froide, c'est-à-dire une zone où cette puissance thermique absorbée par le fluide est transférée vers le milieu extérieur.

Des dispositifs à boucle fluide monophasique utilisent la chaleur sensible du fluide, donc avec des variations importantes de température. Le fluide caloporteur absorbe la puissance dissipée par les équipements, augmentant ainsi sa température, et rejette cette puissance en se refroidissant dans un ou plusieurs radiateurs.

Des dispositifs à boucles fluides diphasiques à pompage capillaire utilisent, comme les caloducs, la chaleur latente de vaporisation du fluide pour absorber et rejeter la chaleur. Le fluide caloporteur change ainsi d'état lors de sa circulation dans la boucle. Il se vaporise en absorbant la chaleur dissipée par les équipements au niveau de l'évaporateur, et se condense en rejetant cette chaleur dans un ou plusieurs condenseurs situés au niveau du radiateur. Le fluide est mis en circulation par une pompe capillaire localisée au niveau de l'évaporateur. Les phases vapeur et liquide sont séparées, hormis au niveau du condenseur où elles circulent dans le même sens, contrairement au caloduc dans lequel les deux phases circulent en sens inverse dans le même tube. Un caloduc est un système diphasique dans lequel la vapeur créée au niveau de la zone chaude (dite zone d'évaporation) est aspirée vers la zone froide (où la pression est moins élevée) et s'y condense sur la paroi du tube. La phase liquide du fluide utilisé glisse le long de la paroi métallique du tube en sens inverse de l'écoulement de la phase vapeur du fluide, qui reste confinée au centre du tube. Ce retour du fluide le long de la paroi est assuré par une structure capillaire (mèche ou rainures longitudinales) reliant les deux extrémités du tube et qui joue à la fois le rôle de pompe capillaire et de séparateur des deux phases liquide-vapeur.

L'eau est généralement le fluide présentant les meilleures performances thermiques dans les dispositifs à transfert de chaleur fonctionnant en boucle fermée et devant opérer dans une gamme de températures comprises entre 0°C et 200 °C. Les performances thermiques d'un fluide sont déterminées, par exemple, par la chaleur latente dudit fluide (exprimée en J/Kg) dans les systèmes diphasiques et par la chaleur spécifique (exprimée en J.Kg⁻¹.°C⁻¹) dans les systèmes monophasiques. Plus la chaleur latente ou respectivement la chaleur spécifique est grande, plus le fluide présente de bonnes performances thermiques.

Cependant les utilisations de l'eau sont limitées en raison des problèmes de gel qui, d'une part, empêche le fonctionnement du système thermique et d'autre part entraîne une destruction des contenants dans lesquels l'eau circule sous l'effet de la dilatation de l'eau lors de la phase de congélation.

Lors des phases de solidification, l'eau présente en effet une augmentation de volume sous l'effet de l'arrangement de son réseau cristallin. Cette augmentation de volume est de l'ordre de 7% en volume (la densité de la glace est de 0,93 g/cm³ et densité de l'eau est de 0,998 g/cm³ à 0°C). Dans un dispositif d'échange de chaleur de l'art antérieur comprenant un contenant sous forme d'une canalisation, assez longue pour avoir un comportement sous forme bidimensionnelle, remplie d'eau, un calcul simple donne une augmentation du rayon de la canalisation de l'ordre de 10% lorsque l'eau remplissant la canalisation se solidifie à 0°C. Cette valeur est généralement supérieure à la limite élastique des différents matériaux constituant le contenant voire supérieure à leur limite à la rupture. Les conséquences de la solidification de l'eau sont alors de deux ordres :
- dans le cas d'un dépassement de la limite à la rupture du matériau constituant le contenant, il y a destruction de la canalisation avec pour conséquence une perte de liquide lors du dégel,
- dans le cas d'un dépassement de la limite élastique du matériau constituant le contenant, il y a déformation plastique de la canalisation avec augmentation du diamètre et amincissement de la paroi. Lors de la phase de dégel, il n'y a pas de perte de liquide, par contre en cas de cycles de gel et de dégel successifs il y a une dégradation progressive de la canalisation conduisant à sa destruction. Les mêmes problèmes affectent les dispositifs contenant tout fluide dont le volume augmente lors de sa solidification.

Différentes solutions ont déjà été envisagées afin de pallier à ces inconvénients. De la demande de brevet FR2686346, on connaît l'utilisation d'un fluide constitué d'un mélange d'eau et d'un antigel. L'antigel diminue la température de congélation de l'eau et empêche la formation de glace à 0°C. A titre d'exemple, les antigels les plus connus sont le polyéthylène de glycol ou le polypropylène de glycol mais aussi les alcools (éthanol, éthanol....). Une autre solution décrite dans la demande de brevet WO2007097482 consiste à réchauffer le dispositif d'échange de chaleur lors des phases de fonctionnement à des températures négatives afin d'empêcher la formation de glace.

Ces deux solutions présentent l'inconvénient de réduire fortement les performances thermiques du dispositif d'échange de chaleur aussi appelé système thermique. A titre d'exemple, un échangeur de chaleur contenant un fluide composé d'un mélange d'eau et d'éthylène de glycol présente des performances thermiques inférieures de 30 à 40% à celle d'un échangeur comprenant un fluide composé d'eau et d'air. Cet inconvénient est très gênant dans les systèmes diphasiques comme les caloducs ou les boucles diphasiques pour lesquels l'utilisation de mélanges binaires ou ternaires non azéotropes induit des phénomènes de distillation qui sont complètement incompatibles avec les niveaux de performances thermiques demandés.

La demande de brevet US 2004/148959 divulgue un dispositif de transfert thermique comprenant des objets compressibles sous l'effet d'une pression exercée sur eux lors de la solidification du fluide.

Le but de la présente invention est de proposer un dispositif d'échange de chaleur limitant les risques de détérioration du contenant renfermant un fluide caloporteur dont le volume augmente lors de sa solidification à basse température tout en garantissant de bonnes performances thermiques.

A cet effet l'invention a pour objet un dispositif de transfert thermique fonctionnant en boucle fermée comprenant un contenant dans lequel circule un fluide caloporteur en boucle fermée, ledit fluide caloporteur étant apte à subir une augmentation de volume lors de sa solidification, ledit contenant renfermant en outre des particules en suspension dans ledit fluide caloporteur, au moins certaines des particules étant compressibles sous l'effet de la pression dudit fluide, lors de la solidification dudit fluide, de sorte à compenser au moins partiellement l'augmentation de volume dudit fluide lors de sa solidification. Au moins certaines des particules compressibles sous l'effet de la pression dudit fluide, lors de la solidification dudit fluide sont des nanoparticules comprenant un maillage tridimensionnel comprenant des mailles formées par un assemblage d'atomes (ou de molécules) et de liaisons reliant les atomes adjacents (ou molécules adjacentes), dans lequel au moins une liaison entre deux atomes (ou molécules) adjacent(e)s est une liaison non-covalente.

Avantageusement, le dispositif selon l'invention présente une ou plusieurs des caractéristiques suivantes :
- les particules qui sont compressibles sont déformables élastiquement,
- les particules qui sont compressibles sont aptes à se comprimer sous l'effet d'une pression supérieure à un seuil de pression compris entre 20 MPa et 80 MPa,
- la compression de particules qui sont compressibles lors de la solidification dudit fluide compense totalement le changement de volume dudit fluide lors de sa solidification,
- la concentration volumique des particules qui sont compressibles dans le mélange est comprise entre 1% et 30%,
- le taux de variation de volume des particules qui sont compressibles sous l'effet de la solidification dudit fluide est compris entre 10% et 60%,
- le fluide comprend de l'eau,
- le fluide caloporteur comprend au moins un premier composé et un antigel ou un produit anticorrosion ou un produit apte à augmenter les performances thermiques du premier composé,
- l'antigel comprend au moins un composant parmi le polyéthylène de glycol, le polypropylène de glycol, un alcool,
- au moins certaines des particules sont des nanoparticules comprenant un maillage affaibli issu d'un maillage tridimensionnel comprenant des mailles formées par un assemblage d'atomes (ou de molécules), des liaisons reliant les atomes adjacents (ou molécules

adjacentes), dans lequel au moins une liaison entre deux atomes (ou molécules) adjacent(e)s est une liaison non-covalente notamment une liaison hydrogène ou une liaison ionique et dans lequel au moins une liaison entre deux atomes (ou molécules) adjacent(e)s est supprimée,
- le maillage est apte à se recroqueviller lors de la solidification du fluide,
- lors de la solidification du fluide, le maillage passe d'un état initial dans lequel il est en suspension dans ledit fluide à un état final dans lequel il est en suspension dans ledit fluide solidifié, l'état final et l'état initial étant des conformères,
- le maillage est réalisé à base de métal, par exemple,le nickel, le cuivre, l'aluminium, de carbone, d'oxyde métallique ou de nitrure métallique,
- au moins certaines des particules sont des particules micrométriques comprenant chacune une enveloppe réalisée dans un matériau déformable élastiquement, ladite enveloppe fermée délimitant un espace tridimensionnel,
- ladite enveloppe est réalisée dans un matériau élastique,
- ladite enveloppe est réalisée en caoutchouc, en nitrile, en silicone ou en EDPM,
- ladite enveloppe est étanche audit fluide,
- ladite enveloppe a une forme sphérique,
- ladite enveloppe est recouverte d'un dépôt métallique ou d'un dispositif en alliage métallique séparant la particule et ledit fluide,
- lors de la solidification du fluide, les particules qui sont compressibles passent d'un état initial dans lequel les enveloppes sont détendues, à un état final dans lequel les enveloppes sont tendues,
- le contenant contient un réseau capillaire,
- le contenant est réalisé dans un ou plusieurs matériaux comprenant le cuivre et/ou l'acier et/ou l'aluminium et/ou un alliage de cuivre et/ou d'aluminium,
- la densité desdites particules est égale à 10% près à celle du fluide lors que celui-ci est à l'état liquide.

D'autres caractéristiques et avantages de l'invention apparaîtront à la lecture de la description détaillée qui suit, faite à titre d'exemple non limitatif et en référence aux dessins annexés dans lesquels :

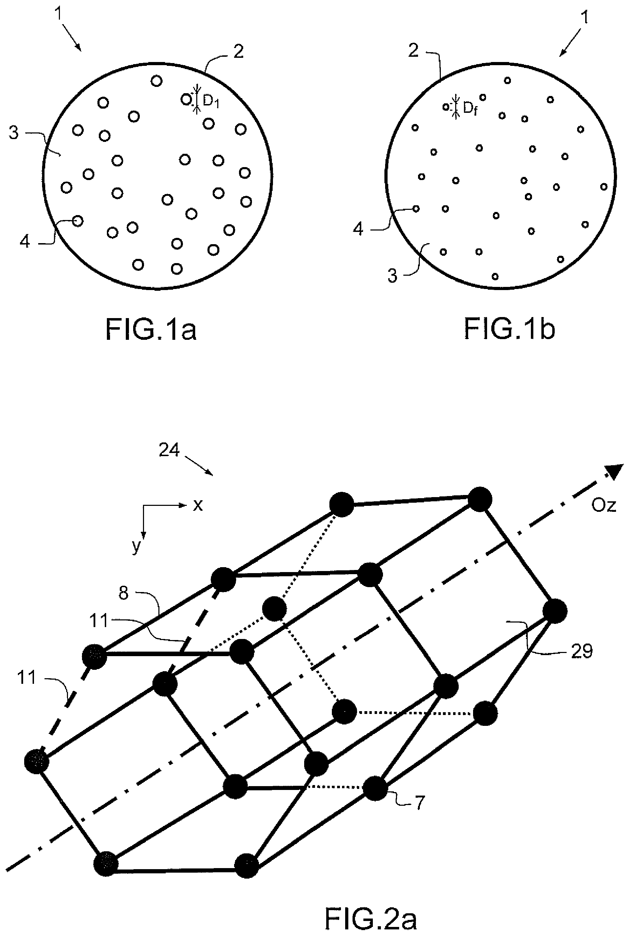

- la figure 1a représente schématiquement une coupe d'une section circulaire d'un contenant renfermant un fluide caloporteur d'un dispositif selon l'invention lorsque le fluide caloporteur est à l'état liquide, la figure 1b représente schématiquement une section circulaire du même contenant dudit dispositif selon l'invention lorsque le fluide caloporteur est à l'état gelé,

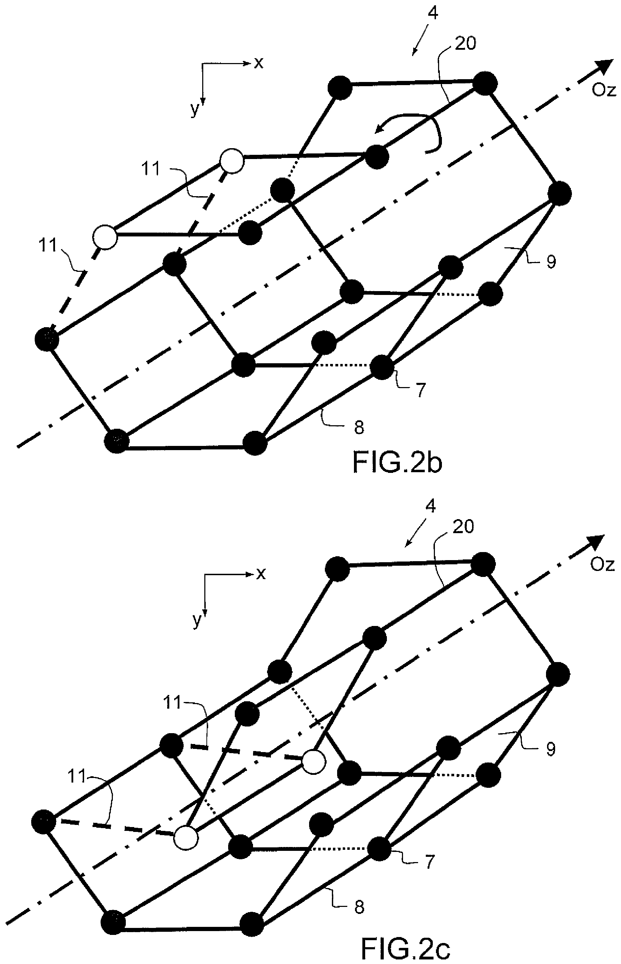

- la figure 2a, représente schématiquement un premier exemple d'une nanoparticule utilisée dans un dispositif selon un premier mode de réalisation de l'invention; la figure 2b représente schématiquement en perspective un deuxième exemple de nanoparticule, ladite nanoparticule étant représentée dans un état initial dans lequel elle est en suspension dans un fluide à l'état liquide; la figure 2c représente schématiquement la même nanoparticule que sur la figure 2b, dans un état final dans lequel elle est en suspension dans ledit fluide solidifié,

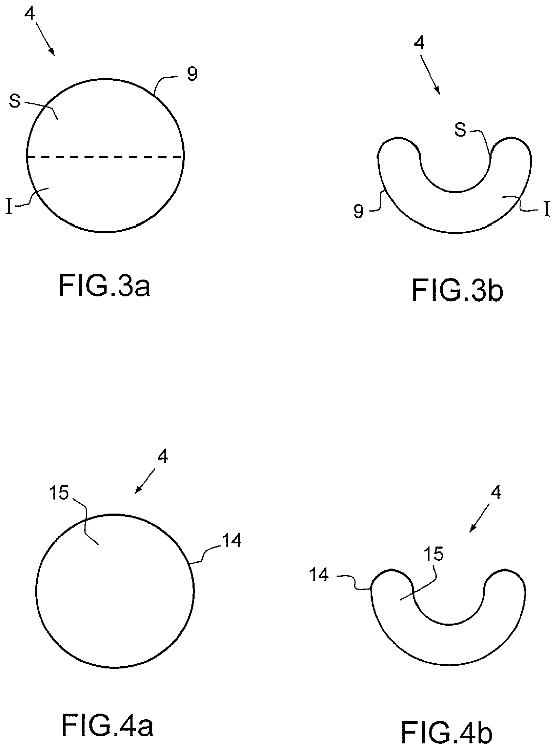

- la figure 3a représente schématiquement en perspective un troisième exemple de nanoparticule utilisée dans un dispositif selon le premier mode de réalisation de l'invention, ladite particule étant représentée dans un état initial dans lequel elle est en suspension dans un fluide à l'état liquide; la figure 3b représente schématiquement la même nanoparticule que sur la figure 3a dans un état final dans lequel elle est en suspension dans ledit fluide solidifié,
- la figure 4a représente schématiquement en coupe un exemple de microparticule utilisée dans un dispositif selon un deuxième mode de réalisation de l'invention, ladite microparticule étant représentée dans un état initial dans lequel elle est en suspension dans un fluide à l'état liquide; la figure 4b représente schématiquement la même nanoparticule que sur la figure 4a dans un état final dans lequel elle est en suspension dans ledit fluide solidifié.

D'une figure à l'autre, les mêmes éléments sont repérés par les mêmes références.

Sur la figure 1a, on a représenté schématiquement une coupe d'un contenant 2 d'un exemple de dispositif 1 de transfert ou d'échange de chaleur selon l'invention contenant un fluide 3 dans un état liquide. Le contenant est en contact avec une zone chaude et une zone froide non représentées. Le contenant 2, de préférence fermé, contient un fluide 3 dont le volume augmente lors de sa solidification.

Le fluide a une température de solidification donnée T. Si le fluide est de l'eau, sa température de solidification ou de gel T est de 0°C.

Des particules 4 sont mises en suspension dans le fluide. Ces particules sont insolubles dans le fluide 3. Le mélange comprenant le fluide et les particules est, par exemple, réalisé par une méthode classique d'agitation par ultrasons. Avantageusement, les particules sont fonctionnalisées de sorte qu'elles ne s'agglomèrent pas. De préférence, la densité desdites particules est égale à 10% près à celle du fluide 3 lors que celui-ci est à l'état liquide. Cela favorise l'homogénéité de la dispersion des particules dans le fluide.

Par contenant, on entend tout corps renfermant le mélange comprenant le fluide et les particules en suspension dans ledit fluide. Le fluide circule en boucle fermée dans le contenant formant un circuit fermé. On parle de dispositif à transfert de chaleur à boucle fermée. Le contenant est soit constitué d'un matériau unique, soit il est réalisé en plusieurs matériaux. Par exemple, il comprend une ou plusieurs portions reliées et communiquant entre elles qui sont éventuellement formées de matériaux différents. Par exemple, la boucle de circulation de l'eau comprend un tuyau, une pompe et un échangeur thermique reliés et communiquant entre eux.

Le contenant peut avoir une forme de canalisation ou de cuve, il peut présenter des ailettes dans lesquelles circule le mélange. Le contenant peut comprendre une portion réalisée sous forme d'un micro-canal. Par micro-canal, on entend un canal de taille micrométrique dans au moins une direction. Le contenant est réalisé dans un ou plusieurs matériaux. Le contenant est par exemple réalisé au moins partiellement en cuivre, en acier ou en aluminium, en alliage de cuivre ou d'aluminium. Ces matériaux sont chimiquement compatibles avec l'eau.

Sur la figure 1a, les particules 4 occupent chacune un volume sphérique initial de diamètre initial moyen D1. Plus précisément, sur cette figure, le contenant 2 est rempli d'un fluide à l'état liquide et/ou gazeux. Les particules 4 occupent en totalité un premier volume V1 au sein du fluide. Sur la figure 1b, on a représenté schématiquement une coupe d'un contenant 2 d'un exemple de dispositif 1 de transfert de chaleur selon l'invention lorsque le fluide est dans un état solide (ou gelé). De la figure 1a à la figure 1b, les particules passent de l'état initial à un état final dans lequel elles occupent chacune un volume de diamètre final moyen Df pour occuper, au sein du solide, un second volume V2 inférieur au premier volume V1.

Les particules 4 sont compressibles. Autrement dit, elles se compriment sous l'effet d'une pression mécanique supérieure à un seuil de pression prédéterminé, exercée par le milieu dans lequel elles sont en suspension. On entend d'une particule qui se comprime, une particule dont le volume occupé au sein du fluide diminue.

Avantageusement, le seuil de pression est de préférence inférieur à la limite élastique du (ou des) matériau(x) constituant le contenant. En variante, le seuil de pression est inférieur à la pression correspondant à la limite de rupture du (ou des) matériau(x) constituant le contenant. La limite élastique d'un contenant en cuivre ou en aluminium est typiquement atteinte lorsqu'une pression supérieure ou égale à 100 Mega Pascals (MPa) est exercée sur celui-ci. Le seuil de pression est de préférence compris entre 20 MPa et 80 MPa. Ainsi les particules se compriment pendant la phase de solidification du milieu qui les entoure avant que la limite élastique du contenant ne soit atteinte. Le seuil de pression est en variante compris entre 50 MPa et 300 MPa. Ainsi, les particules se compriment pendant la phase de solidification du milieu qui les entoure avant que la limite de rupture du contenant ne soit atteinte.

De préférence, en phase de solidification, la diminution du volume des particules compense totalement l'augmentation de volume du fluide liée à sa solidification. Autrement dit, la différence entre le premier volume V1 occupé par les particules 4 dans le fluide 3 et le second volume V2 occupé par les particules lorsque le fluide 3 est à l'état solide est égale à la différence de volume entre l'eau à l'état solide et l'eau à l'état liquide. Le volume global du mélange comprenant le fluide et les particules au sein de la canalisation reste inchangé lors de phase de solidification et de fusion. Le mélange est isochore.

En variante, la variation de volume des particules lors de la solidification du fluide compense en partie la variation de volume du fluide lors de sa solidification. On s'affranchit ainsi des problèmes de destruction du contenant liés à l'augmentation du volume de l'eau lors de sa solidification. A titre d'exemple, en supposant la concentration volumique des particules dans le mélange égale à 12% et en supposant que le taux de variation du volume des particules sous l'effet de la solidification du fluide est de 50%, le mélange de fluide et de particules a, pendant la phase de solidification, un taux d'expansion de l'ordre 1%. Ce taux est tout à fait compatible avec les limites élastiques des matériaux constituant classiquement les contenants. Le taux d'augmentation de volume du mélange est avantageusement compris entre 0 et 2 %. Sa valeur dépend de la forme du contenant.

De préférence, la concentration volumique des particules dans le mélange est comprise entre 1% et 30% du volume du mélange. On choisit une concentration volumique en particules en fonction du taux de variation de volume des particules lors de la solidification du fluide ainsi que du taux de variation du volume du mélange, lors de la solidification du fluide, acceptable pour l'application considérée. De, préférence on choisit des particules dont le taux de variation de volume sous l'effet de la solidification du fluide est compris entre 10 et 60%.

De préférence, toutes les particules sont compressibles. En variante, au moins une partie des particules 4 sont compressibles. Les concentrations évoquées précédemment s'appliquent aux particules 4 qui sont compressibles, c'est-à-dire à la portion des particules qui sont compressibles.

De préférence, les particules compressibles sont déformables élastiquement. Autrement dit, la compression des particules lors de la solidification du fluide qui les entoure est réversible. En d'autres termes les particules sont aptes à se dilater et respectivement se contracter sous l'effet de la fusion et respectivement de la solidification du fluide. De cette manière, le dispositif selon l'invention peut suivre plusieurs cycles de gel et de dégel tout en conservant de bonnes performances mécaniques (pas de cassure du contenant.)

On a donné l'exemple d'un fluide constitué d'eau mais le fluide peut être dépourvu d'eau. Il peut s'agir d'un mélange homogène réalisé à base d'au moins un premier composé et un deuxième composé par exemple un produit anticorrosion ou un produit apte à améliorer les performances thermiques du premier composé ou un antigel. Un antigel est apte à procurer au fluide comprenant l'antigel et un premier composé, une température de solidification inférieure à celle du premier composé. Parmi les antigels les plus connus on peut citer le polyéthylène de glycol ou le polypropylène de glycol mais aussi les alcools notamment l'éthanol et le méthanol. Un mélange d'eau et d'antigel présente une température de solidification inférieure à 0°C, les particules utilisées dans le dispositif selon l'invention permettent de limiter l'augmentation de volume de ce mélange à sa température de solidification.

Le dispositif à transfert de chaleur peut être un dispositif monophasique ou un dispositif diphasique comme les caloducs ou les boucles diphasiques. En effet, dans les gammes de températures usuelles comprises entre 0°C et 200 °C ces systèmes présentent une efficacité optimale lorsqu'ils fonctionnent avec de l'eau qui n'est pas à l'état solide. Cependant, en cas de stockage à froid ils ne doivent pas être détruits ou altérés sous l'effet de la cristallisation de l'eau.

Les figures 2b, 2c, 3a, 3b, représentent des exemples présentés à titre non limitatif de particules utilisée dans un dispositif selon un premier mode de réalisation de l'invention dans leurs états initiaux respectifs lorsqu'elles sont en suspension dans un fluide (figures 2a, 2b et 3a) et dans leur états finaux respectifs lorsqu'elles sont en suspension dans un solide (figures 2c et 3b.)

Dans ce premier mode de réalisation, les particules 4 comprennent des nanoparticules. Par nanoparticule on entend une particule dont la taille est nanométrique dans au moins une dimension. Plus précisément, la particule présente dans au moins une dimension une taille comprise entre 10⁻¹⁰ m et 10⁻⁷m. La taille des nanoparticules dans une deuxième dimension peut être comprise entre 10⁻¹⁰ m et quelques micromètres. C'est par exemple le cas d'un nanotube.

Les nanoparticules utilisées dans le dispositif selon l'invention sont par exemple réalisées à base de métal comme par exemple le nickel le cuivre ou l'aluminium, à base de carbone, d'oxyde métallique ou de nitrure métallique.

Sur la figure 2a, on a représenté un premier exemple de nanoparticule de nanoparticules 4 dans un état initial dans le dispositif selon un premier mode de réalisation de l'invention. Les nanoparticules 4 comprennent un maillage tridimensionnel 29 comprenant un assemblage d'atomes 7 (ou de molécules) formant, par des liaisons 8 entre atomes adjacents (ou molécules adjacentes), des mailles parmi lesquelles au moins une liaison 11 est une liaison non-covalente, par exemple, du type liaison hydrogène ou liaison ionique. Les mailles sont répétées plusieurs fois dans la particule 4.

Dans l'exemple représenté sur la figure 2a, le maillage 29 a une structure cristalline composée d'atomes ou de molécules 7 régulièrement disposés en hexagones dans des plans Ox, Oy et en rectangles dans la direction Oz perpendiculaire au plan Ox, Oy. Chaque atome ou molécule 7 présente deux liaisons représentées en traits pleins épais sur la figure 2a (ou en traits fins pointillés pour tenir compte de la perspective), formant un angle de 120° avec deux atomes (ou molécules) adjacent(e)s dans le plan Ox, Oy et deux liaisons formant un angle de 180 degrés avec deux atomes (ou molécules) adjacent(e)s dans la direction Oz. La nanoparticule 4 comprend parmi les liaisons 8, deux liaisons faibles 11 dans deux plans Ox, Oy parallèles et passant par deux hexagones adjacents représentées en traits épais pointillés. Les autres liaisons sont des liaisons covalentes. La présence de ces liaisons faibles présente l'avantage de permettre un déplacement de deux atomes (représentés en cercles non pleins) appartenant à une liaison faible sous l'effet de la pression mécanique exercée par le fluide lors de sa solidification. Les atomes sont aptes à entrer en rotation autour d'une liaison de rotation 20. La molécule est rendue flexible par la présence de liaisons non covalentes.

Sur la figure 2b, on a un deuxième exemple de nanoparticule 4 dans son état initial. La nanoparticule 4 comprend, un maillage 9 affaibli issu du maillage 29 dans lequel au moins une liaison entre deux atomes (ou molécules) adjacent(e)s est supprimée. Dans l'exemple représenté sur la figure 2b, deux liaisons ont en outre été supprimées par rapport au maillage 29 dans les plans Ox, Oy qui comprennent les liaisons faibles 11. Une liaison manque également dans la direction Oz. La suppression de certaines liaisons facilite la rotation des atomes liés aux liaisons faibles 11 autour d'une liaison de rotation 20 parallèle à l'axe Oz.

La suppression de certaines liaisons et la présence de liaisons faibles dans les maillages 9 et 29 rendent les nanoparticules 4 déformables. Plus particulièrement, le maillage 29 présentant des liaisons faibles 11 et le maillage affaibli 9, dépourvu d'une ou plusieurs liaisons et comprenant des liaisons faibles 11, sont déformables sous l'effet de la pression exercée sur le maillage, lors de la cristallisation du fluide. Ainsi, lorsque le fluide cristallise le maillage 9 et le maillage 29 passent chacun d'un état initial respectif dans lequel ils sont en suspension dans un fluide et occupent un volume initial, à un état final respectif dans lequel ils sont en suspension dans un solide et occupent un état final respectif. Les volumes initiaux sont supérieurs aux volumes finaux. On dit que les maillages se recroquevillent lors de la solidification du fluide.

On a représenté sur les figures 2b et 2c, l'état initial et respectivement l'état final du maillage affaibli 9. Sous l'effet de la pression exercée sur le nanotube affaibli lors de la solidification du fluide, un groupe d'atomes (ou molécules) représentés par des cercles et liés aux liaisons affaiblies 11 pivote autour d'une liaison de rotation 20 s'étendant parallèlement à l'axe Oz pour venir de sa position initiale représentée sur la figure 2b à une position finale 2c dans laquelle il rentre dans l'espace initialement délimité par le maillage 9. Le maillage 9 initialement tubulaire s'est recroquevillé. Le volume occupé par la particule dans ledit solide est inférieur au volume occupé par la particule dans ledit fluide. L'état final étant obtenu à partir de l'état initial par rotation d'atomes autour d'une liaison du maillage, on dit que ces deux états sont des conformères. De préférence, le maillage est déformable élastiquement de sorte que la particule est déformable élastiquement. Le maillage est alors apte à reprendre sa forme initiale lors de la fusion du fluide. C'est par exemple le cas des conformères.

Sur les figure 3a et 3b, on a représenté un troisième exemple d'état initial et respectivement final d'une nanoparticule comprise dans un dispositif selon le premier mode de réalisation. Sur ces figures, pour plus de clarté, on a fait une représentation à l'échelle de la nanoparticule et non à l'échelle de l'atome (ou de la molécule) comme sur les figures 2a à 2c.

Les nanoparticules 4 comprennent un maillage de forme sphérique comprenant une partie (ou demi-sphère) supérieure S et une partie (ou demi-sphère) inférieure I entourant un espace fermé (non représenté) dans lesquelles certaines liaisons sont faibles et/ou supprimées. Par exemple, les liaisons de la partie supérieure S de la particule 4 sont faibles contrairement aux liaisons de la partie inférieure I de la particule. Ainsi, lors de la solidification du fluide, la partie supérieure S de la sphère 9 se replie sur (c'est-à-dire se rapproche de) la partie inférieure I de la sphère 9. Dans le premier mode de réalisation du dispositif selon l'invention, la taille (ou diamètre) de la particule devant être largement inférieure à celle du contenant, le contenant peut être un micro-canal.

Sur les figures 4a et 4b, on a représenté en coupe respectivement un exemple de forme initiale et de forme finale d'une particule 4 utilisée dans un dispositif selon un deuxième mode de réalisation de l'invention. Dans le deuxième mode de réalisation, les particules comprennent des particules micrométriques. Des particules micrométriques présentent une taille de l'ordre du micromètre dans au moins une première direction. Elles présentent dans une deuxième direction, une taille au moins égale à leur taille dans la première direction. La taille dans la deuxième direction va éventuellement jusqu'au millimètre. Dans ce mode de réalisation, les particules comprennent une enveloppe 14 réalisée dans un matériau élastique. L'enveloppe 14 renferme avantageusement un espace tridimensionnel 15. Avantageusement l'espace fermé est vide ou contient un gaz. Ce matériau est par exemple un élastomère tel que du caoutchouc, de la silicone, du nitrile ou de l'EPDM (Ethylène Propylène Diène Monomère.)

Avantageusement l'enveloppe est étanche au fluide. Par ailleurs l'enveloppe est avantageusement détendue élastiquement dans son état initial. Cela permet à l'enveloppe de se tendre lors de la cristallisation du fluide qui l'entoure pour passer dans un état final dans lequel l'enveloppe est tendue. Ainsi sous l'effet de la pression mécanique, l'enveloppe se déforme. L'enveloppe se tend de sorte à se replier sur elle même. Le volume de l'espace tridimensionnel 15 diminue, la pression du gaz éventuellement contenu dans celui-ci augmente.

Autrement dit, dans l'état initial, l'enveloppe 14 présente un minimum d'énergie. Lorsque le fluide se solidifie, il apporte de l'énergie, par pression mécanique, à l'enveloppe de sorte à permettre à celle-ci de se courber pour se replier sur elle-même. Autrement dit , la microparticule se recroqueville sur elle-même. Lors de la fusion du fluide, l'effort exercé sur l'enveloppe se relâche et elle revient à son état initial.

Avantageusement l'enveloppe élastique 14 est recouverte d'un dépôt métallique (non représenté) formant une surface de contact entre l'enveloppe 14 et le fluide 3. Ce mode de réalisation permet d'éviter certaines incompatibilités chimiques entre la base élastique et le fluide. En effet, certains dispositifs de transfert de chaleur comme les dispositifs diphasiques sont sensibles à cette incompatibilité. Le dépôt métallique doit être suffisamment fin afin de ne pas induire des efforts de pression supplémentaires pour ne pas contrarier l'élasticité de l'enveloppe. Avantageusement, l'enveloppe élastique est recouverte d'un dépôt métallique, par exemple du nickel de l'aluminium ou cuivre d'une épaisseur comprise entre 5 nm et 5 micromètres.

En variante, au moins une portion des particules 4 comprend des nanoparticules et/ou des microparticules telles que décrites précédemment.

Les dispositifs à transfert thermiques diphasiques contiennent généralement des chambres ou des tubes remplis de liquide qui sont endommagés en cas d'augmentation du volume d'eau. Les contenants peuvent également contenir un réseau capillaire constitué d'un réseau poreux comme par exemple un fritté de cuivre ou de bronze. Afin d'avoir des performances thermiques convenables, ce réseau capillaire doit présenter des pores de taille comprise entre 1 et 50 micromètres. Comme il est essentiel que les particules n'obstruent pas ces pores, leur taille maximale est de préférence inférieure à 0,1 micromètres soit 100 nanomètres. On choisit de préférence des nanoparticules pour ces applications.

Les particules utilisées dans les deux modes de réalisation peuvent permettre d'améliorer les transferts thermiques ; grâce notamment à l'augmentation des propriétés thermiques du mélange telle que la conductivité et la capacité calorifique.

## Revendications

1. Dispositif (1) de transfert thermique fonctionnant en boucle fermée comprenant un contenant (2) dans lequel circule un fluide (3) caloporteur en boucle fermée, ledit fluide (3) caloporteur étant apte à subir une augmentation de volume lors de sa solidification, **caractérisé en ce que** ledit contenant (2) renferme en outre des particules (4) en suspension dans ledit fluide (3) caloporteur, au moins certaines des particules (4) étant compressibles sous l'effet de la pression exercée sur ces dernières lors de la solidification dudit fluide (3), de sorte à compenser au moins partiellement l'augmentation de volume dudit fluide (3) lors de sa solidification, au moins certaines des particules (4) compressibles sous l'effet de la pression exercée sur ces dernières lors de la solidification dudit fluide (3) étant des nanoparticules comprenant un maillage tridimensionnel (29) comprenant des mailles formées par un assemblage d'atomes (7) (ou de molécules) et de liaisons (8) reliant les atomes adjacents (ou molécules adjacentes), dans lequel au moins une liaison (11) entre deux atomes (ou molécules) adjacent(e)s est une liaison non-covalente.

2. Dispositif (1) à transfert thermique selon la revendication précédente, **caractérisé en ce que** les particules sont déformables élastiquement.

3. Dispositif (1) à transfert thermique selon l'une quelconque des revendications précédentes, **caractérisé en ce que** le fluide comprend de l'eau.

4. Dispositif (1) à transfert thermique selon l'une quelconque des revendications précédentes, **caractérisé en ce que** le fluide (3) caloporteur comprend au moins un premier composé et un antigel ou un produit anticorrosion ou un produit apte à augmenter les performances thermiques du premier composé.

5. Dispositif (1) à transfert thermique selon l'une quelconque des revendications 1 à 4, **caractérisé en ce qu'**au moins certaines des particules (4) compressibles sous l'effet de la pression exercée sur ces dernières lors de la solidification dudit fluide (3) sont des nanoparticules comprenant un maillage affaibli (9) issu d'un maillage tridimensionnel (29) comprenant des mailles formées par un assemblage d'atomes (7) (ou de molécules), et de liaisons (8) entre atomes adjacents (ou molécules adjacentes), dans lequel au moins une liaison (11) entre deux atomes (ou molécules) adjacent(e)s est une liaison non-covalente et dans lequel au moins une liaison (8) entre deux atomes (ou molécules) adjacent(e)s est supprimée.

6. Dispositif (1) à transfert thermique selon l'une quelconque des revendications précédentes, **caractérisé en ce que** le maillage (9, 29) est apte à se recroqueviller lors de la solidification du fluide (3).

7. Dispositif (1) à transfert thermique selon l'une quelconque des revendications précédentes, **caractérisé en ce que** lors de la solidification du fluide (3), le maillage (9, 29) passe d'un état initial dans lequel il est en suspension dans ledit fluide (3) à un état final dans lequel il est en suspension dans ledit fluide solidifié, l'état final et l'état initial étant des conformères.

8. Dispositif (1) à transfert thermique selon l'une quelconque des revendications précédentes, **caractérisé en ce que** le maillage (9, 29) est réalisé à base de métal.

9. Dispositif (1) à transfert thermique selon la revendication précédente, dans lequel le métal est pris parmi le nickel, le cuivre, l'aluminium, le carbone, un oxyde métallique ou un nitrure métallique.

10. Dispositif (1) à transfert thermique selon l'une quelconque des revendications précédentes, dans lequel au moins une liaison non-covalente est une liaison hydrogène.

11. Dispositif (1) à transfert thermique selon l'une quelconque des revendications précédentes, dans lequel au moins une liaison non-covalente est une liaison ionique.

12. Dispositif (1) à transfert thermique selon l'une quelconque des revendications précédentes, **caractérisé en ce qu'**au moins certaines des particules (4) sont des particules micrométriques comprenant chacune une enveloppe (14) réalisée dans un matériau déformable élastiquement, ladite enveloppe (14) fermée délimitant un espace tridimensionnel (15).

13. Dispositif (1) à transfert thermique selon la revendication précédente, **caractérisé en ce que** ladite enveloppe (14) est réalisée dans un matériau élastique.

14. Dispositif (1) à transfert thermique selon la revendication précédente, **caractérisé en ce que** ladite enveloppe (14) est réalisée en caoutchouc, en silicone, en nitrile ou en EPDM.

15. Dispositif (1) à transfert thermique selon l'une quelconque des revendications 12 à 14, **caractérisé en ce que** ladite enveloppe est étanche audit fluide (3).

16. Dispositif (1) à transfert thermique selon l'une quelconque des revendications 12 à 15, **caractérisé en ce que** ladite enveloppe (14) a une forme sphérique.

17. Dispositif (1) à transfert thermique selon l'une quelconque des revendications 12 à 16, **caractérisé en ce que** ladite enveloppe (14) est recouverte d'un dépôt métallique ou d'un dispositif en alliage métallique séparant la particule (4) et ledit fluide (3).

## Patentansprüche

1. Wärmeübertragungsvorrichtung (1), die in geschlossenem Kreislauf arbeitet und einen Behälter (2) umfasst, in dem ein Wärmeübertragungsfluid (3) in geschlossenem Kreislauf zirkuliert, wobei das Wärmeübertragungsfluid (3) in der Lage ist, bei seiner Verfestigung eine Volumenerhöhung zu durchlaufen, **dadurch gekennzeichnet, dass** der Behälter (2) ferner Partikel (4) einschliesst, die in Suspension in dem Wärmeübertragungsfluid (3) sind, wobei mindestens einige der Partikel (4) unter Einwirkung des auf diese ausgeübten Drucks bei der Verfestigung des Fluids (3) komprimierbar sind, so dass die Volumenerhöhung des Fluids (3) bei dessen Verfestigung mindestens teilweise kompensiert wird, wobei mindestens einige der Partikel (4), die unter Einwirkung des auf diese ausgeübten Drucks bei der Verfestigung des Fluids (3) komprimierbar sind, Nanopartikel sind, die ein dreidimensionales Netz aus Maschen (29) umfassen, das Maschen umfasst, die durch ein Gebilde von Atomen (7) (oder Molekülen) und von Verbindungen (8) gebildet sind, die die aneinandergrenzenden Atomen (oder aneinandergrenzenden Molekülen) verbinden, wobei mindestens eine Verbindung (11) zwischen zwei aneinandergrenzenden Atomen (oder Molekülen) eine nicht kovalente Verbindung ist.

2. Wärmeübertragungsvorrichtung (1) nach dem vorhergehenden Anspruch, **dadurch gekennzeichnet, dass** die Partikel elastisch verformbar sind.

3. Wärmeübertragungsvorrichtung (1) nach einem der vorhergehenden Ansprüche, **dadurch gekennzeichnet, dass** das Fluid Wasser umfasst.

4. Wärmeübertragungsvorrichtung (1) nach einem der vorhergehenden Ansprüche, **dadurch gekennzeichnet, dass** das Wärmeübertragungsfluid (3) mindestens eine erste Verbindung und ein Frostschutzmittel oder ein Korrosionsschutzmittel oder ein Produkt umfasst, das geeignet ist, die thermischen Leistungsmerkmale der ersten Verbindung zu steigern.

5. Wärmeübertragungsvorrichtung (1) nach einem der Ansprüche 1 bis 4, **dadurch gekennzeichnet, dass** mindestens einige der Partikel (4), die unter der Einwirkung des auf diese bei der Verfestigung des Fluids (3) ausgeübten Drucks komprimierbar sind, Nanopartikel sind, die ein geschwächtes Netz (9) umfassen, das aus einem dreidimensionalen Netz (29) stammt, das Maschen umfasst, die durch ein Gebilde von Atomen (7) (oder Molekülen) und von Verbindungen (8) zwischen aneinandergrenzenden Atomen (oder aneinandergrenzenden Molekülen) gebildet sind, wobei mindestens eine Verbindung (11) zwischen zwei aneinandergrenzenden Atomen (oder Molekülen) eine nicht kovalente Verbindung ist und wobei mindestens eine Verbindung (8) zwischen zwei aneinandergrenzenden Atomen (oder Molekülen) entfernt wurde.

6. Wärmeübertragungsvorrichtung (1) nach einem der vorhergehenden Ansprüche, **dadurch gekennzeichnet, dass** das Netz (9, 29) in der Lage ist, sich bei der Verfestigung des Fluids (3) zusammenzuziehen.

7. Wärmeübertragungsvorrichtung (1) nach einem der vorhergehenden Ansprüche, **dadurch gekennzeichnet, dass** bei der Verfestigung des Fluids (3) das Netz (9, 29) von einem Anfangszustand, in dem es in dem Fluid (3) in Suspension ist, in einen Endzustand übergeht, in dem es in dem verfestigten Fluid in Suspension ist, wobei der Endzustand und der Anfangszustand Konformere sind.

8. Wärmeübertragungsvorrichtung (1) nach einem der vorhergehenden Ansprüche, **dadurch gekennzeichnet, dass** das Netz (9, 29) auf Metall basierend gebildet ist.

9. Wärmeübertragungsvorrichtung (1) nach dem vorhergehenden Anspruch, wobei das Metall aus Nickel, Kupfer, Aluminium, Kohlenstoff, einem Metalloxid oder einem Metallnitrid genommen wird.

10. Wärmeübertragungsvorrichtung (1) nach einem der vorhergehenden Ansprüche, wobei mindestens eine nicht kovalente Verbindung eine Wasserstoffverbindung ist.

11. Wärmeübertragungsvorrichtung (1) nach einem der vorhergehenden Ansprüche, wobei mindestens eine nicht kovalente Verbindung eine ionische Verbindung ist.

12. Wärmeübertragungsvorrichtung (1) nach einem der vorhergehenden Ansprüche, **dadurch gekennzeichnet, dass** mindestens einige der Partikel (4) mikrometrische Partikel sind, die jeweils eine Hülle (14) umfassen, die aus einem elastisch verformbaren Material gebildet ist, wobei die geschlossene Hülle (14) einen dreidimensionalen Raum (15) abgrenzt.

13. Wärmeübertragungsvorrichtung (1) nach dem vorhergehenden Anspruch, **dadurch gekennzeichnet, dass** die Hülle (14) aus einem elastischen Material gebildet ist.

14. Wärmeübertragungsvorrichtung (1) nach dem vorhergehenden Anspruch, **dadurch gekennzeichnet, dass** die Hülle (14) aus Kautschuk, Silikon, Nitril oder EPDM gebildet ist.

15. Wärmeübertragungsvorrichtung (1) nach einem der Ansprüche 12 bis 14, **dadurch gekennzeichnet, dass** die Hülle dem Fluid (3) gegenüber dicht ist.

16. Wärmeübertragungsvorrichtung (1) nach einem der Ansprüche 12 bis 15, **dadurch gekennzeichnet, dass** die Hülle (14) eine Kugelform besitzt.

17. Wärmeübertragungsvorrichtung (1) nach einem der Ansprüche 12 bis 16, **dadurch gekennzeichnet, dass** die Hülle (14) mit einer metallenen Ablagerung oder einer Vorrichtung aus Metalllegierung bedeckt ist, die den Partikel (4) und das Fluid (3) trennt.

## Claims

1. A heat transfer device (1) operating in a closed loop comprising a container (2) in which a heat transfer fluid (3) circulates in a closed loop, said heat transfer fluid (3) being capable of undergoing an increase in volume during its solidification, **characterised in that** said container (2) further contains particles (4) suspended in said heat transfer fluid (3), at least some of the particles (4) being compressible under the effect of the pressure exerted on them during the solidification of said fluid (3), so as to at least partially compensate for the volume increase of said fluid (3) during its solidification, at least some of the particles (4) which are compressible under the effect of the pressure exerted on them during the solidification of said fluid (3) being nanoparticles comprising a three-dimensional lattice (29) comprising meshes formed by an assembly of atoms (7) (or molecules) and bonds (8) connecting the adjacent atoms (or adjacent molecules), wherein at least one bond (11) between two adjacent atoms (or molecules) is a non-covalent bond.

2. Heat-transfer device (1) according to the preceding claim, **characterized in that** the particles are elastically deformable.

3. Heat-transfer device (1) according to any of the preceding claims, **characterized in that** the fluid comprises water.

4. Heat-transfer device (1) according to any of the preceding claims, **characterized in that** the heat-transfer fluid (3) comprises at least a first compound and an anti-freeze or an anti-corrosion product or a product capable of increasing the thermal performance of the first compound.

5. Heat-transfer device according to any of the claims 1 to 4, **characterized in that** at least some of the particles (4) which are compressible under the effect of the pressure exerted on the latter during the solidification of said fluid (3) are nanoparticles comprising a weakened mesh (9) from a three-dimensional lattice (29) comprising meshes formed by an assembly of atoms (7) (or molecules), and bonds (8) between adjacent atoms (or adjacent molecules), wherein at least one bond (11) between two adjacent atoms (or molecules) is a non-covalent bond, and wherein at least one bond (8) between two adjacent atoms (or molecules) is suppressed.

6. Heat-transfer device (1) according to any of the preceding claims, **characterized in that** the lattice (9, 29) is capable of crumpling during the solidification of said fluid (3).

7. Heat-transfer device (1) according to any of the preceding claims, **characterized in that**, during the solidification of said fluid (3), the lattice (9, 29) goes from an initial state in which it is suspended in said fluid (3) to a final state in which it is suspended in said solidified fluid, the final state and the initial state being conformers.

8. Heat-transfer device (1) according to any of the preceding claims, **characterized in that** the lattice (9, 29) is made based on metal.

9. Heat-transfer device (1) according to the preceding claim, wherein the metal is chosen from nickel, copper, aluminium, carbon, a metal oxide or a metal nitride.

10. Heat-transfer device (1) according to any of the preceding claims, wherein at least one non-covalent bond is hydrogen bond.

11. Heat-transfer device (1) according to any of the preceding claims, wherein at least one non-covalent bond is an ionic bond.

12. Heat-transfer device (1) according to any of the preceding claims, **characterized in that** at least some of the particles (4) are micron-sized particles each comprising a shell (14) made of an elastically deformable material, said closed shell (14) delimiting a three-dimensional space (15).

13. Heat-transfer device (1) according to the preceding claim, **characterized in that** said shell (14) is made of an elastic material.

14. Heat-transfer device (1) according to the preceding claim, **characterized in that** said shell (14) is made of rubber, silicone, nitrile or EPDM

15. Heat-transfer device (1) according to any of claims 12 to 14, **characterized in that** said shell is impermeable to said fluid (3).

16. Heat-transfer device (1) according to any of claims 12 to 15, **characterized in that** said shell (14) has a spherical shape.

17. Heat-transfer device (1) according to any of claims 12 to 16, **characterized in that** said shell (14) is covered with a metal coating or with a device made of a metal alloy separating the particle (4) and said fluid (3).
